# EUROPEAN PATENT APPLICATION

(11) **EP 4 714 908 A1**
(43) Date of publication of application: **25.03.2026**
(21) Application number: 24806208.5
(22) Date of filing: 01.04.2024
(51) Int. Cl.: C02F 1/28, C02F 1/42, B01J 20/34, B01J 49/50, B01J 49/53, B01J 49/57, B01D 53/14, C02F 103/18

(54) **DRAWER-TYPE CARBON CAPTURE SOLVENT PURIFICATION AND RECOVERY DEVICE AND METHOD**

(30) Priority: 17.05.2023 CN 202310553277
(71) Applicant: Huaneng Clean Energy Research Institute, Beijing 102209 (CN)
(72) Inventor: WANG, Huanjun, Beijing 102209 (CN); SUN, Beiqi, Beijing 102209 (CN); LIU, Niu, Beijing 102209 (CN); GUO, Dongfang, Beijing 102209 (CN); FAN, Jinhang, Beijing 102209 (CN); LIU, Hanming, Beijing 102209 (CN)
(74) Representative: advotec.
(86) International application number: PCT/CN2024/085234
(87) International publication number: WO 2024/234848

(57) **Abstract**

Provided are a drawer-type carbon capture solvent purification and recovery device and method. The recovery device includes a support, a mounting frame and a purification module, the purification module is connected in an insertable manner to the mounting frame along the outer periphery of the mounting frame at equal intervals, and two adjacent purification modules are communicated with each other. The left half of the mounting frame forms a purification region, and the right half of the mounting frame forms a regeneration region. A liquid to be filtered sequentially flows through all purification modules in the purification region from top to bottom and then is discharged from a liquid outlet pipe. When the packing of the uppermost purification module in the purification region fails, the mounting frame is rotated, so that the failed purification module is rotated to the regeneration region, and the lowest purification module in the regeneration region is rotated to the purification region accordingly.

## Description

### CROSS-REFERENCE TO RELATED APPLICATIONS

The present application is based on and claims the priority of Chinese patent application No. 2023105532776 filed on May 17, 2023, the entire contents of which are incorporated herein by reference.

### FIELD

The present application relates to the technical field of purification and recovery, in particular to a drawer-type carbon capture solvent purification and recovery device and a recovery method.

### BACKGROUND

In the post-combustion carbon capture device, the solution circulates in a closed loop, and the solution will a produce heat-stable salt, a high molecular weight degradation product, a metal ion and other pollutants during its regeneration process. Heat-stable salts are such as oxalate, sulfate, formate, acetate and nitrate, etc., high molecular weight degradation products are mainly amines, such as 1-(2-hydroxyethyl)-imidazolinone, N-(2-hydroxyethyl)-ethylenediamine, N-acetylethanolamine, aminoacetic acid and amino compounds formed by aminoacetic acid and amine, etc., and other pollutants are mainly impurities captured from flue gas or generated by solution corrosion. Heat-stable salts, high molecular weight degradation products and other pollutants pose a great threat to the carbon capture device after amino combustion, i.e. corrosion and unstable operation lead to unplanned failures and shutdowns. In this process, pollutant by-products of heat-stable salts are formed and gradually accumulated to the allowable limit in the absorption circulation loop. The operation problems of carbon capture devices after combustion, such as corrosion and productivity reduction, are usually attributed to the accumulation of heat-stable salts. These heat-stable salts will lead to high-cost maintenance problems, such as corrosion, frequent replacement of filters, foaming in the absorber, blockage of the absorber, scaling of the heat exchanger and reduction of the amount of amine available for gas treatment, thus reducing the productivity of the device. Therefore, the post-combustion carbon capture solvent system needs a solution purification system to maintain the quality of the solution.

The existing post-combustion carbon capture device mainly uses activated carbon filter to purify the regenerated lean liquid. Activated carbon filter mainly uses activated carbon organic flocs with a high carbon content, a large molecular weight and a large specific surface area to physically adsorb impurities in the solution. When the solution passes through the pore of activated carbon, various suspended particles and organic substances are adsorbed in the pore of activated carbon under the action of van der Waals force. However, the activated carbon filter can not completely remove the heat-stable salt, the high molecular weight degradation product, the metal ion and other pollutants, and the residual impurities in the solution will affect the normal operation of the carbon capture system. Therefore, it is necessary to adopt a variety of solution purification technologies according to the properties of solvents to improve the purification level of solvents.

In addition, for the commonly used activated carbon filter, with the increase of purification time, the adsorption capacity of the packing gradually decreases. The adsorption capacity of the packing layer becomes weaker from top to bottom, the uppermost layer of the packing fails first, and the lowermost layer of the packing fails at last. For the traditional activated carbon filter, the packing is usually replaced when the packing layer is close to penetration, and it is complicated when replacing the packing, so it is necessary to stop the machine and take out all the packings for replacement or regeneration. This not only affects the efficiency of solution purification, but also increases the workload of operation.

### SUMMARY

Embodiments of the present disclosure aim to provide a drawer-type carbon capture solvent purification and recovery device and recovery method, which can adopt different purification packing combinations and facilitate the replacement of packings at specific positions.

An aspect of the present disclosure proposes a drawer-type carbon capture solvent purification and recovery device, including a support, a mounting frame and a purification module, wherein the mounting frame is in a wheel shape, the support supports the mounting frame through a rotating shaft, one end of the rotating shaft is keyed or fixedly connected with the center of the mounting frame, and the other end of the rotating shaft is connected with a driving device; a plurality of mounting slots are provided at equal intervals along an outer periphery of the mounting frame, and two adjacent mounting slots are communicated with each other, and each mounting slot is insertably connected with one purification module; the purification module includes a filter portion and a insertable portion which are fixedly connected with each other; the insertable portion is insertably connected into the mounting slot; the filter portion is provided with a cavity for containing a packing; the filter portion is provided with a liquid inlet pipe and a liquid outlet pipe which are communicated with the cavity; a control valve is provided at both the liquid inlet pipe and the liquid outlet pipe; both sides of the filter portion are symmetrically provided with a first connecting hole and a second connecting hole, and both the first connecting hole and the second connecting hole are communicated with the cavity, and two adjacent filter portions are connected in a sealed manner through a telescopic pipe, and the telescopic pipe is provided in the first connecting hole of one of the two adjacent filter portions, and is inserted into the second connecting hole of the other filter portion after the telescopic pipe is extended outwards; an external regulating mechanism is connected with the telescopic pipe and controls the telescopic pipe to be extended or contracted and inserted, and both the first connecting hole and the second connecting hole are provided with an electromagnetic valve at one side inside the cavity; the mounting frame is divided into a purification region on the left half and a regeneration region on the right half, and the number of purification modules in the purification region and the number of purification modules in the regeneration region are the same; the insertable portion includes a frame, an elastic sheet, a pressing portion and a boss, wherein the elastic sheet is in a fan-shaped structure; the pressing portion and the boss are both fixed on a same side of the elastic sheet; a narrower end of the elastic sheet is connected with an outward side of the frame; the pressing portion is fixed on the other end of the elastic sheet; the outward side of the mounting frame is provided with a plurality of first insertion holes matched with the boss; and the insertable portion is inserted into the first insertion holes so as to be fixed through the boss, and the pressing portion is positioned outside the mounting frame, and when the pressing portion is pressed, the boss is separated from the first insertion hole, so that the purification module is pulled out from the mounting frame; and the regulating mechanism includes a rotating rod and a first guide block, wherein the first guide block is fixed on the rotating rod; the filter portion is provided with a second insertion hole for the rotating rod to extend into and a guide hole for the first guide block to extend into; the guide hole is in an arc-shape; one end of the rotating rod extends out of the purification module; the other end of the rotating rod is fixedly connected with a side wall of the telescopic pipe; and a spiral slot is provided at an inner side of the first connecting hole, and a second guide block is fixed on the side wall of the telescopic pipe, and the second guide block is snapped into the spiral slot, and when the rotating rod is pulled clockwise or counterclockwise, the second guide block of the telescopic pipe rotates along the spiral slot, so that the telescopic pipe extends out toward the second connecting hole or contracts into the first connecting hole.

In some embodiments, an openable and closable sealing insertable plate is provided outside the cavity of the filter portion.

In some embodiments, a handle for pulling the purification module is provided at the outer side of the filter portion.

In some embodiments, each purification module is provided with a conductivity meter and a differential pressure gauge.

Another aspect of the present disclosure proposes a drawer-type carbon capture solvent purification and recovery method, using the drawer-type carbon capture solvent purification and recovery device according to any one of above embodiments of the present disclosure, includes the following steps:
S1, pulling out all purification modules from the mounting frame, inserting the purification modules into the mounting slot of the mounting frame after filling the packing required for filtration in each purification module, and pulling each rotating rod to make all two adjacent purification modules communicate through the telescopic pipe;
S2, controlling the electromagnetic valves of the two adjacent purification modules at the uppermost and the electromagnetic valves of the two adjacent purification modules at the lowermost to be in a closed state, so that a left half of the mounting frame forms the purification region, the right half forms the regeneration region, and the electromagnetic valves between the rest of other two adjacent purification modules are in an open state;
S3, opening a control valve of the liquid inlet pipe of the uppermost purification module of the purification region and a control valve of a liquid outlet pipe of the lowermost purification module of the purification region, introducing liquid to be filtered into the purification module from the liquid inlet pipe, and discharging the liquid from the liquid outlet pipe of the lowermost purification module after sequentially flowing through all the purification modules in the purification region from top to bottom;
S4, after filtering for a period of time, with the retention in the packing in the purification module gradually increasing, the packing in the uppermost purification module fails first, closing the control valve of the uppermost liquid inlet pipe and the control valve of the lowermost liquid outlet pipe in the purification region, starting the driving device, rotating the mounting frame clockwise, and the uppermost purification module in the purification region is rotated to the regeneration region, the lowermost purification module in the regeneration region is rotated to the purification region, the electromagnetic valve in the closed state in step S2 is turned on, the electromagnetic valve of the uppermost two adjacent purification modules and the electromagnetic valve of the lowermost two adjacent purification modules are turned off at this time, the control valve of the uppermost liquid inlet pipe and the control valve of the lowermost liquid outlet pipe in the purification region are turned on at this time, and the liquid to be filtered is continuously introduced into the purification modules from the liquid inlet pipe;
S5, water-washing, regenerating or replacing the packing of the purification module transferred from the purification region to the regeneration region, and the water-washed, regenerated or replaced packing is to be reused;
S6, repeating steps S4-S5 until the liquid to be filtered is completely filtered.

In some embodiments, in step S5, the methods of water-washing and regeneration are as follows: closing the electromagnetic valves at both sides of the purification module to be regenerated and water-washed, opening the control valves of the liquid inlet pipe and the liquid outlet pipe of the purification module, introducing the liquid needed for regeneration into the purification module from the liquid outlet pipe, soaking the packing for a period of time, and then discharging the liquid, and then introducing water into the purification module from the liquid outlet pipe to clean the packing, and discharging the water flow carrying the retention from the liquid inlet pipe.

In some embodiments, in step S4, based on that all purification modules in the purification region is a modular group with multiple kinds of packings arranged in sequence, the modular group is integrally rotated to the regeneration region.

Embodiments of the present disclosure have the following beneficial effects.
(1) Embodiments of the present disclosure are suitable for the purification and recovery of solvents containing different impurities, and the purification solution is flexible and adjustable, with high universality, and the types and degrees of impurities contained in the absorbent can be controlled by setting different kinds or numbers of adsorbent bed layers;
(2) According to the principle that the drawer is convenient to draw out, embodiments of the present disclosure provide a multi-layer drawers on the mounting frame, which is convenient to adopt combination of different purification technologies, freely replace the packings at specific positions, and reduce the operation step;
(3) Embodiments of the present disclosure adopt a ferris wheel-type mounting frame, and the purification module in the purification region that needs to be water-washed, regenerated or replaced with packing can be transferred to the regeneration region only by rotating the mounting frame, and the regenerated purification module in the regeneration region can be rotated to the purification region;
(4) Each purification module in embodiments of the present disclosure is equipped with a conductivity meter and a differential pressure gauge to monitor the conductivity index of each purification module and the pressure difference index before and after of each purification module respectively, so as to judge whether the packing is necessary to water-wash, regenerate or replace.

### BRIEF DESCRIPTION OF THE DRAWINGS

The above and/or additional aspects and advantages of the present disclosure will be apparent and easily understood from the following description of embodiments taken in combination with the accompanying drawings,
FIG. 1 is a schematic structural view of a drawer-type carbon capture solvent purification and recovery device in an embodiment of the present disclosure;
FIG. 2 is a side view of FIG. 1;
FIG. 3 is a schematic view after the sealing insertable plate in FIG. 1 is removed;
FIG. 4 is an enlarged schematic view of part A in FIG. 3;
FIG. 5 is a schematic structural view of the mounting frame in FIG. 1;
FIG. 6 is a schematic structural view of the purification module in FIG. 1;
FIG. 7 is a schematic rear view of the purification module in FIG. 6;
FIG. 8 is a schematic view of the purification module in FIG. 6 without a telescopic pipe;
FIG. 9 is a schematic view of a rotating rod and a telescopic pipe connected with each other in an embodiment of the present disclosure.

### Reference numerals:

1- liquid inlet pipe; 2- sealing insertable plate; 3- liquid outlet pipe; 4- pressing portion; 5- boss; 6- rotating rod; 7- support; 8- purification module; 9- rotating shaft; 10- mounting frame; 11- second insertion hole; 12- handle; 13- cavity; 14- electromagnetic valve; 15- mounting slot; 16- first insertion hole; 17- guide hole; 18- first connecting hole; 19- filter portion; 20- insertable portion; 21- elastic sheet; 22- second connecting hole; 23- first guide block; 24- telescopic pipe; 25- second guide block; 26- spiral slot.

### DETAILED DESCRIPTION

Hereinafter, embodiments of the present disclosure will be described in detail, examples of which are illustrated in the accompanying drawings. The embodiments described below by referring to the accompanying drawings are illustrative and are intended to explain the present disclosure, and should not be construed as limiting the present disclosure.

Hereinafter, a drawer-type carbon capture solvent purification and recovery device according to embodiments of the present disclosure will be described with reference to the drawings.

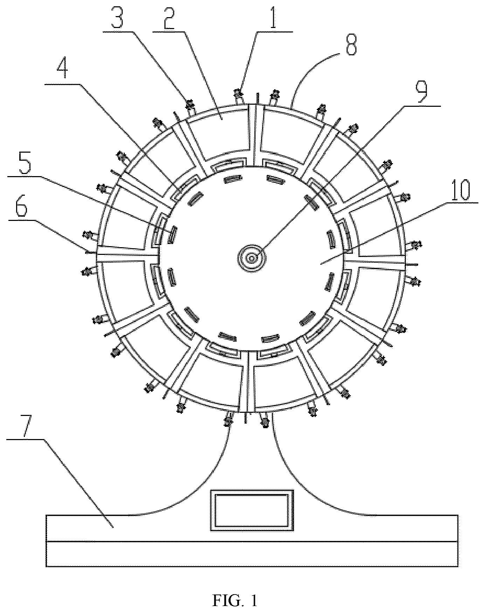

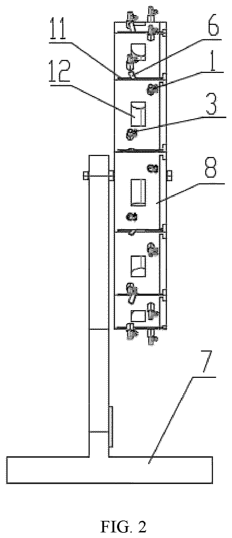

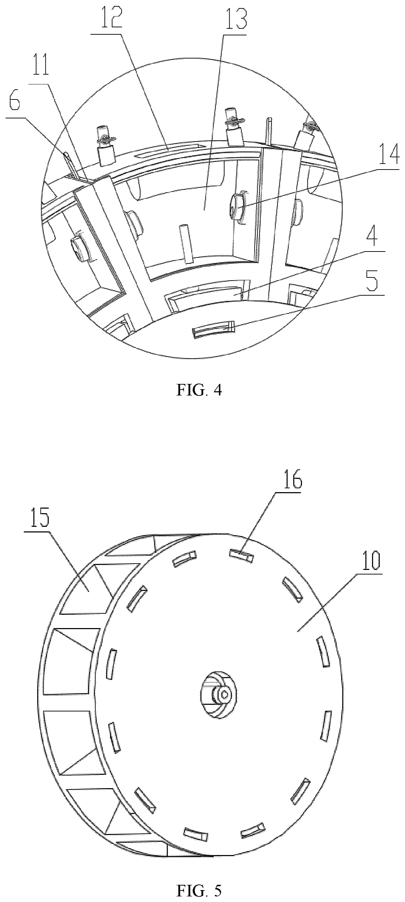

As shown in FIGS. 1-2, an embodiment of the present disclosure proposes a drawer-type carbon capture solvent purification and recovery device, which includes a support 7, a mounting frame 10 and a purification module 8. As shown in FIG. 5, the mounting frame 10 is in a disk shape, and a plurality of mounting slots 15 are provided at equal intervals along the outer circumferential surface of the mounting frame 10, and two adjacent mounting slots 15 are communicated with each other, and one purification module 8 can be insertably connected into each mounting slot 15. The mounting frame 10 includes a front panel and a rear panel which are parallel to each other, and the mounting slots 15 are provided between the front panel and the rear panel. The front panel and the rear panel are both circular, and the centers of the front panel and the rear panel are provided with shaft holes for installing the rotating shaft 9.

The support 7 supports the mounting frame 10 through a rotating shaft 9, and one end of the rotating shaft is keyed or fixedly connected with the shaft hole at the center of the mounting frame 10, and the other end of the rotating shaft is connected with a driving device, which is not shown in the figure. The driving device can be a reducer with adjustable rotation angle. The thickness and material of the rotating shaft 9 are sufficient to support the mounting frame 10 in use, and the dimension of the rotating shaft 9 in the figure are only schematic.

The mounting frame 10 is divided into a purification region positioned in the left half thereof and a regeneration region positioned in the right half thereof, and the number of purification modules 8 in the purification region and the number of purification modules 8 in the regeneration region are the same. The purification region is used for filtering the liquid through the purification modules 8 layer by layer, and the regeneration region is used for water-washing and regenerating or replacing the packing of the purification module 8 for later use. For example, as shown in FIG. 1, the purification region is provided with six purification modules 8, and the regeneration region is also provided with six purification modules 8, and the purification region and the regeneration region are symmetrically arranged left and right.

Since the purification modules 8 are equidistantly provided along the outer circumference of the mounting frame 10, one purification module 8 is rotated from the purification region to the regeneration region by a fixed angle each time. For example, there are 12 purification modules 8 in total, and the purification modules 8 are arranged along a circle circumference, so the angle of each purification module 8 is 30 degrees, that is, the counterclockwise rotation angle each time of the reducer can be set to 30 degrees.

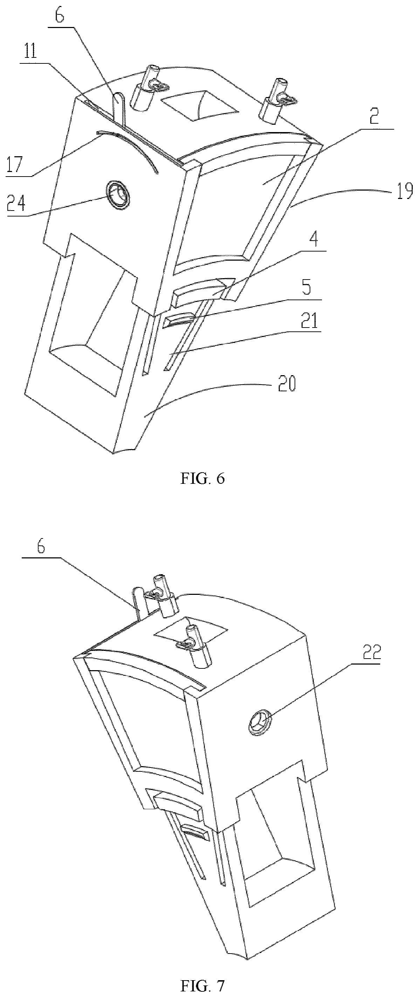

As shown in FIGS. 6-8, each purification module 8 is in a fan-shaped structure. The purification module 8 includes a filter portion 19 and an insertable portion 20 which are fixedly connected or integrally formed. The filter portion 19 is positioned on the outward side of the mounting frame 10, and the insertable portion 20 has a fan-shaped shape. The insertable portion 20 is positioned on the inward side of the mounting frame 10, and the insertable portion 20 is insertably connected in the mounting slot 15. The filter portion 19 has a fan-shaped structure, and the outer surface of the filter portion 19 includes an outer arc surface, an inner arc surface, a front surface, a rear surface and two side surfaces. The two side surfaces are opposite surfaces between two adjacent filter portions 19. The inner arc surface is the connection surface connecting with the insertable portion 20. The filter portion 19 is internally provided with a cavity 13 for containing packings, and the outer arc surface is provided with a liquid inlet pipe 1 and a liquid outlet pipe 3 which are communicated with the cavity 13. The liquid inlet pipe 1 is used for introducing the liquid to be filtered, and the liquid outlet pipe 3 is used for discharging the filtered liquid. Control valves are provided at the liquid inlet pipe 1 and the liquid outlet pipe 3. The control valve can be controlled manually or electromagnetically. The outer arc surface is also provided with a handle 12 for pulling and pushing the purification module 8.

In some specific embodiments, the handle 12 is a concave structure facing the inside of the filter portion 19, and a hand-elastic sheeting structure is provided in the concave structure.

As shown in FIG. 6, the front surface of the filter portion 19 has an opening of the cavity 13, and the opening is provided with an openable and closable sealing insertable plate 2 for replacing the packing in the filter portion 19. Specifically, the bottom and two sides of the opening of the filter portion 19 are provided with slots for inserting the sealing insertable plate 2, and a gasket is provided in the slots, so that a sealing structure is formed after the sealing insertable plate 2 is inserted into the opening to prevent the liquid in the cavity 13 from flowing out.

In some specific embodiments, the sealing insertable plate 2 can be transparent, which is convenient for observing the change of the packing in the cavity 13. For example, when there are too many retentions in the packing, the mounting frame 10 can be rotated in time. For another example, when the packing is cleaned and regenerated, the change inside the packing can also be observed, and the process of cleaning and regeneration can be evaluated with the monitoring values of the conductivity meter and of the differential pressure gauge, without pulling out the purification module 8.

In some specific embodiments, each purification module 8 is equipped with a conductivity meter and a differential pressure gauge to monitor the conductivity index and the pressure difference index of the packing in each purification module 8 respectively, so as to determine whether it is necessary to clean and regenerate the packing in the purification module 8. The mounting and use methods of the conductivity meter and differential pressure gauge can be found in related technologies, which will not be repeated here.

As shown in FIG. 7-8, two sides of the filter portion 19 are symmetrically provided with a first connecting hole 18 and a second connecting hole 22, both of which are communicated with the cavity 13, and two adjacent filter portions 19 are hermetically connected through an adjustable telescopic pipe 24, and the telescopic pipe 24 is provided in the first connecting hole 18 of one of the two adjacent filter portions 19, and is inserted into the second connecting hole 19 of the other filter portion 19 after being extended out, that is, one telescopic pipe 24 is installed on each filter portion 19. The telescopic pipe 24 is connected with an external control mechanism, and the control mechanism controls the extension and insertion of the telescopic pipe 24.

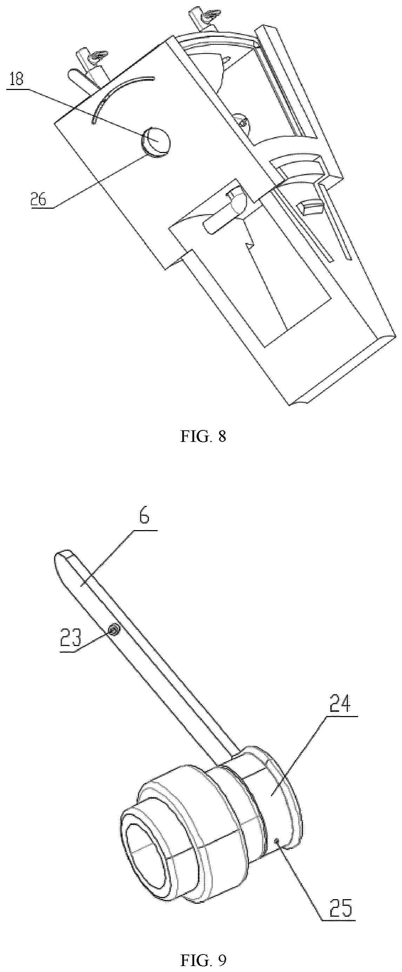

In some specific embodiments, as shown in FIG. 9, the control mechanism includes a rotating rod 6 and a first guide block 23, the first guide block 23 is fixed on the rotating rod 6, and the filter portion 19 is provided with a second insertion hole 11 for the rotating rod 6 to extend in and a guide hole 17 for the first guide block 23 to extend in. The second insertion hole 11 is provided on the outer arc surface of the filter portion 19, and one end of the rotating rod 6 extends out from the outer arc surface to form a handle structure for manual pulling. The other end of the rotating rod 6 is fixedly connected with the side wall of the telescopic pipe 24. The guide hole 17 is arc-shaped. The guide hole 17 is provided on the side of the filter portion 19 where the telescopic pipe 24 is provided. The first guide block 23 is inserted into the guide hole 17 and slides along the guide hole 17. The first guide block 23 is in a columnar structure and does not extend out of the guide hole 17.

The inner side of the first connecting hole 18 is provided with a spiral slot 26, and the spiral slot 26 is similar to a thread structure. A second guide block 25 is fixed on the side wall of the telescopic pipe 24, and the second guide block 25 is snapped into the spiral slot 26. When the rotating rod 6 is pulled clockwise or counterclockwise, the second guide block 25 of the telescopic pipe 24 rotates clockwise or counterclockwise along the spiral slot 26, so that the telescopic pipe 24 extends out toward the second connecting hole 22 of the adjacent purification module 8 or contracts into the first connecting hole 18. Since the stroke of the rotating rod 6 is short, the length of the spiral slot 26 can be designed according to the stroke of the rotating rod 6. The wall of the second connecting hole 22 is provided with a sealing ring, and when the telescopic pipe 24 is inserted into the second connecting hole 22, the telescopic pipe 24 and the sealing ring are closely matched with the stroke sealing structure to prevent the liquid from flowing out.

Because the telescopic pipe 24 is fixedly connected with the rotating rod 6, the rotating rod 6 will move laterally at the same time when the telescopic pipe 24 expands and contracts, so a certain space will be left in the second insertion hole 11 to enable the rotating rod 6 to move laterally. The length of the first guide block 23 is designed so that the first guide block 23 does not disengage with the guide hole 17 or extend out of the guide hole 17 regardless of the position of which end the rotating rod 6 moves laterally.

In some embodiments, the rotating rod 6 and the telescopic pipe 24 can also be connected through a snap-slot. That is, the end of the rotating rod 6 is provided with a snap-block, and the telescopic pipe 24 is provided with a snap-slot matched with the snap-block. After the snap-block is inserted into the snap-slot, the rotating rod 6 can drive the telescopic pipe 24 to rotate.

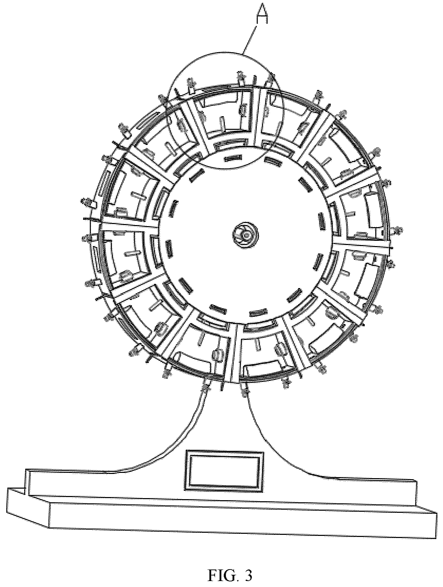

As shown in FIG. 3-4, both the first connecting hole 18 and the second connecting hole 22 are provided with electromagnetic valves 14 at one side inside the cavities 13 for controlling the communication or dis-communication between two adjacent purification modules 8. Specifically, a short connecting pipe is connected to the side of the first connecting hole 18 and the side of the second connecting hole 22 facing the inside of the cavity 13, and the electromagnetic valve 14 is installed on the connecting pipe. The electromagnetic valve 14 is an electromagnetic valve 14 with a waterproof function, and the electromagnetic valve 14 is a wireless electromagnetic valve that can be remotely controlled on and off. The mounting mode and use mode can refer to related technologies, which will not be repeated here. The switching functions of all electromagnetic valves 14 can be integrated on the control panel, and the control panel can be installed on the support 7. The control panel can be provided with a display screen for displaying the on-off state of the electromagnetic valve 14, and the values of the conductivity meter and differential pressure gauge of each purification module 8 can also be transmitted to the display screen remotely, which can refer to related technology and will not be described in detail here.

In some specific embodiments, as shown in FIG. 6, the insertable portion 20 includes a frame, an elastic sheet 21, a pressing portion 4 and a boss 5, and the elastic sheet 21 is in a fan-shaped structure, the pressing portion 4 and the boss 5 are both fixed on the same side of the elastic sheet 21, the narrower end of the elastic sheet 21 is connected with the outward side of the frame, the pressing portion 4 is fixed on the wider end of the elastic sheet 21, and the boss 5 is positioned near the middle of the elastic sheet 21. In order to facilitate pressing, the thickness of the pressing portion 4 is greater than that of the boss 5. On the outward side of the mounting frame 10, there are a plurality of first insertion holes 16 matched with the boss 5, and all the first insertion holes 16 are arranged around a circle. The insertable portion 20 is fixed by inserting the boss 5 into the first insertion hole 16, and the pressing portion 4 is positioned outside the outer periphery of the front panel of the mounting frame 10. When the pressing portion 4 is pressed, the boss 5 is separated from the first insertion hole 16 due to the elasticity of the elastic sheet 21, so that the purification module 8 is pulled out from the mounting frame 10.

Another aspect of embodiments of the present disclosure provides a drawer-type carbon capture solvent purification and recovery method, which utilizes the drawer-type carbon capture solvent purification and recovery device described above, including steps S1 to S6.

At step S1, all the purification modules 8 are pulled out from the mounting frame 10, and after the packing required for filtration is filled in each purification module 8, the sealing insertable plate 2 is inserted, and the purification modules 8 are inserted into the mounting slot 15 of the mounting frame 10, and each rotating rod 6 is pulled to make all two adjacent purification modules 8 communicate through the telescopic pipe 24.

At step S2, the electromagnetic valves 14 of the two uppermost adjacent purification modules 8 and the electromagnetic valves 14 of the lowermost two adjacent purification modules 8 are controlled to be in the closed state so that the left half of the mounting frame 10 forms a purification region and the right half of the mounting frame 10 forms a regeneration region, and the electromagnetic valves 14 between other two adjacent purification modules 8 are in the open state, so as to isolate the purification region from the regeneration region and prevent the liquid in the purification region from flowing to the regeneration region.

At step S3, the control valve of the liquid inlet pipe 1 of the uppermost purification module 8 in the purification region and the control valve of the liquid outlet pipe 3 of the lowermost purification module 8 in the purification region are opened, an external conveying pipeline is communicated to the liquid inlet pipe 1, and the liquid to be filtered is introduced into the purification module 8 from the liquid inlet pipe 1, and the liquid is discharged from the liquid outlet pipe 3 of the lowermost purification module 8 in the purification region after the liquid sequentially flows through all the purification modules 8 in the purification region from top to bottom; The liquid outlet pipe 3 is connected with a pipeline, and the other end of the pipeline is a liquid storage tank.

At step S4, after filtering for a period of time, with the retention in the packing in the purification module 8 gradually increasing, the packing in the purification module 8 at the uppermost part fails first, the control valve of the liquid inlet pipe 1 at the uppermost of the purification region is closed, and after the liquid in the purification module 8 in the purification region is drained, the control valve of the liquid outlet pipe 3 at the lowermost of the purification region is closed, the driving device is started, the mounting frame 10 is rotated clockwise, and the uppermost purification module 8 in the purification region is rotated to the regeneration region, and the lowermost purification module 8 in the regeneration region is rotated to the purification region, and the electromagnetic valve 14 that was originally in the closed state in step S2 is turned on, and the electromagnetic valves 14 of the uppermost two adjacent purification modules 8 and of the lowermost two adjacent purification modules 8 are turned off at this time, that is, the purification region and the regeneration region are isolated. The control valve of the uppermost liquid inlet pipe 1 in the purification region and the control valve of the lowermost liquid outlet pipe 3 in the purification region are opened at this time, and the uppermost liquid inlet pipe 1 in the purification region is reconnected to the external delivery pipeline, so as to continuously introduce the liquid to be filtered from the liquid inlet pipe 1 into the purification module 8.

At step S5, the packing of the purification module 8 transferred from the purification region to the regeneration region is water-washed, regenerated or replaced, and the water-washed, regenerated or replaced packing is to be reused.

At step S6, steps S4-S5 are repeated until all liquids to be filtered are filtered.

In some specific embodiments, in step S5, the method of water-washing and regeneration is as follows: closing the electromagnetic valves 14 at two sides of the purification module 8 to be regenerated and water-washed, opening the control valves of the liquid inlet pipe 1 and liquid outlet pipe 3 of the purification module 8, introducing water into the purification module 8 from the liquid outlet pipe 3, and discharging the water with the retentions from the liquid inlet pipe 1, and observing the discharged water flow until there are no retentions.

In some specific embodiments, in step S4, when all the purification modules 8 in the purification region form a modular group with multiple kinds of packings arranged in sequence, the modular group is rotated to the regeneration region as a whole. For example, both the purification region and the regeneration region include six purification modules 8. The arrangement of the six purification modules 8 in the purification region is: an activated carbon layer (1st layer), cationic resin layers (2nd-3rd layer), anionic resin layers (4th-5th layer) and an anion-cation mixed resin layer (6th layer) arranged in sequence from top to bottom, while the regeneration region is arranged in the opposite sequence. When the purification modules 8 in the purification region need to be regenerated by cleaning or replaced, the six purification modules 8 need to be rotated to the regeneration region as a whole.

Embodiments of the present disclosure are suitable for the purification and recovery of solvents containing different impurities, and the purification solution is flexible and adjustable, with high universality, and the types and degrees of impurities contained in the absorbent can be controlled by setting different kinds or numbers of adsorbent bed layers.

According to the principle that the drawer is convenient to draw out, embodiments of the present disclosure provide a multi-layer of drawer on the mounting frame, which is convenient to adopt the combination of different purification technologies, freely replace the packings at specific positions, and reduce the operation steps.

Embodiments of the present disclosure adopt a ferris wheel-type mounting frame, and the purification module in the purification region that needs to be water-washed, regenerated or replaced with packing can be transferred to the regeneration region only by rotating the mounting frame, and the regenerated purification module in the regeneration region can be rotated to the purification region.

Each purification module in embodiments of the present disclosure is equipped with a conductivity meter and a differential pressure gauge to monitor the conductivity index of each purification module and the pressure difference index of each purification module before and after respectively, so as to determine whether it is necessary to water-wash, regenerate or replace the packing.

The present disclosure will be further elaborated by specific embodiments.

### Embodiment 1

The purification and recovery of carbon capture absorbent with high pollutant content are realized by combining the mechanical filtration technology and the anion and cation exchange technology. The specific solution is as follows.

The solution purification and recovery system leads a part of the lean solution from the outlet pipeline of the lean solution pump to pass through the purification device, and the solution enters from the upper end of the purification region and flows out from the lower end of the purification region, and sequentially passes through the following bed layers.

The first layer is an activated carbon layer, whose main functions are decolorization and adsorption, and intercepting a larger particulate impurity.

The second to third layers are cationic resin layers, whose main function is to adsorb and exchange cations in waste liquid.

The fourth to fifth layers are anion resin layers, whose main function is to adsorb and exchange anions in waste liquid.

The sixth layer is a mixed resin layer of anion and cation, whose main function is to adsorb and exchange the anions and cations that have not been completely exchanged in the waste liquid after the front-end treatment.

The purified solvent obtained through the above bed layers returns to the pipeline where the lean solution enters the composite absorption tower again and enters the solution circulation system again.

With the extension of use time and the increase of use times, the retentions in the pores and between particles of activated carbon bed layer gradually increase, which makes the differential pressure of each bed layer increase until it fails. When the activated carbon reaches the saturated adsorption capacity and completely fails, the activated carbon should be regenerated or replaced to meet the engineering requirements. The driving device drives the integral mounting frame 10 to rotate clockwise, so as to rotate the whole purification region to the regeneration region, and then the new purification module 8 in the regeneration region completely rotates to the purification region. During regeneration, according to the differential pressure of the bed, reverse water flow can be used to backwash the filter material, so that most of the retentions adsorbed in the pores of activated carbon can be stripped and taken away by the water flow, and the adsorption function of activated carbon can be restored. Specifically, the electromagnetic valves 14 on two sides of the purification module 8 to be water-washed are closed, and the control valves of the liquid inlet pipe 1 and liquid outlet pipe 3 of the purification module 8 are opened, so that water flows into the purification module 8 from the liquid outlet pipe 3, and the water flows with the retentions are discharged from the liquid inlet pipe 1, and the discharged water flows are observed until there are no retentions. Alternatively, the activated carbon can be directly taken out of the purification module 8 for cleaning or replacement.

Anionic resin or cationic resin should be regenerated and water-washed after a certain period of reaction. Water-washing needs to use desalted water, and 5% sulfuric acid is used for cationic resin regeneration, and 3% sodium hydroxide is used for anionic resin regeneration. The regeneration process is as follows: soaking the anionic resin or the cationic resin in sulfuric acid or sodium hydroxide for 2 hours, observing the properties of the resin, and then water-wash the resin with water. When washing with water, desalted water is introduced to clean the resin until the pH of the cationic resin layer is 5 to 6 and the pH of the anionic resin layer is 8.

Cross-contamination will occur in the regeneration process of anion-cation mixed resin layer, so the regeneration separation process should be improved to improve the regeneration separation degree of anion-cation resin. In this embodiment, the regeneration method is to utilize the density difference between anion and cation resins to separate the two resins by hydraulic backwashing, and then regenerate them with acid and alkali respectively. The regeneration method has been mentioned in the previous paragraph, which will not be repeated here.

### Embodiment 2

The purification and recovery of carbon capture absorbent with high anion impurity content are realized by anion exchange technology. The specific solution is as follows.

The solution purification and recovery system leads a part of the lean solution from the outlet pipeline of the lean solution pump to pass through the purification device, and the solution enters from the upper end of the purification region and flows out from the lower end of the purification region, and sequentially passes through the following bed layers.

The first to sixth layers are anion resins, whose main function is to adsorb and exchange anions in waste liquid.

The purified solvent obtained through the above bed layers returns to the pipeline where the lean solution enters the composite absorption tower again and enters the solution circulation system again.

With the extension of use time and the increase of use times, the anion resin in the resin bed layer will lose its ability to continue to adsorb ions after the anion resin is saturated. The conductivity index of resin bed at different heights is monitored, the spatial distribution curve of conductivity is made to obtain the distribution law of resin working layer. The distribution law of "failure layer-working layer-non-working layer" will appear in the resin layer along the direction of water flow, and the thickness of failure layer will increase with the increase of water conductivity. The failure layer is replaced in time according to the conductivity index. The driving device drives the integral mounting frame 10 to rotate clockwise, rotating the failed layer at the top to the regeneration region, and the new purification module 8 at the bottom of the regeneration region rotates to the bottom of the purification region.

The replaced anionic resin layer is water-washed with water and regenerated. Water-washing needs to use desalted water, and 3% sodium hydroxide is used for anion resin regeneration. The regeneration process is to soak the resin in alkali for 2 hours, observe the properties of the resin, and then wash it with water. When water-washing the resin, desalted water is introduced to clean the resin until the pH of the anionic resin layer equals to 8.

### Embodiment 3

Cation exchange technology is adopted to realize the purification and recovery of carbon capture absorbent with high cationic impurity content. The specific solution is as follows.

The solution purification and recovery system leads a part of the lean solution from the outlet pipeline of the lean solution pump to pass through the purification device, and the solution enters from the upper end of the purification region and flows out from the lower end of the purification region, and sequentially passes through the following bed layers.

The first to sixth layers are cationic resins, whose main function is to adsorb and exchange cations in waste liquid.

The purified solvent obtained through the above bed layers returns to the pipeline where the lean solution enters the composite absorption tower again and enters the solution circulation system again.

With the extension of use time and the increase of use times, the cationic resin in the resin bed loses its ability to continue to adsorb ions after the cationic resin is saturated. The conductivity index of resin bed at different heights is monitored, the spatial distribution curve of conductivity is made to obtain the distribution law of resin working layer. The distribution law of "failure layer-working layer-non-working layer" will appear in the resin layer along the direction of water flow, and the thickness of failure layer will increase with the increase of water conductivity. The invalid bed is replaced in time according to the conductivity index. The driving device drives the integral mounting frame 10 to rotate clockwise, rotating the failed layer at the top to the regeneration region, and the new purification module 8 at the bottom of the regeneration region rotates to the bottom of the purification region.

The replaced cationic resin layer is water-washed with water and regenerated. Water-washing needs to use desalted water, and 5% sulfuric acid is used for cation resin regeneration. The regeneration process is to soak the resin in acid for 2 hours, observe the properties of the resin, and then wash the resin with water. When water-washing the resin, desalted water is introduced to clean the resin until the pH of the cationic resin layer is 5 to 6.

### Embodiment 4

The mechanical filtration technology is adopted to realize the purification and recovery of carbon capture absorbent with high particulate impurity content.

The solution purification and recovery system leads a part of the lean solution from the outlet pipeline of the lean solution pump to pass through the purification device, and the solution enters from the upper end of the purification region and flows out from the lower end of the purification region, and sequentially passes through the following bed layers.

The first to sixth layers are activated carbon bed layers, whose main functions are decolorization and adsorption, and intercepting larger particulate impurities. Activated carbon filter bed layer mainly uses activated carbon organic flocs with high carbon content, large molecular weight and large specific surface area to physically adsorb impurities in solution.

The purified solvent obtained through the above bed layers returns to the pipeline where the lean solution enters the composite absorption tower again and enters the solution circulation system again.

With the extension of use time and the increase of use times, the retentions in the pores and between particles of activated carbon bed gradually increase, which makes the differential pressure of each bed layer increase until it fails. When the activated carbon reaches the saturated adsorption capacity and completely fails, the activated carbon should be regenerated or replaced to meet the engineering requirements. The driving device drives the integral mounting frame 10 to rotate clockwise, rotating the failed layer at the top to the regeneration region, and the new purification module 8 at the bottom of the regeneration region rotates to the bottom of the purification region.

During regeneration, according to the differential pressure of the bed, reverse water flow can be used to backwash the filter material, so that most of the retentions adsorbed in the pores of activated carbon can be stripped and taken away by the water flow, and the adsorption function of the activated carbon can be restored.

In the description of the present disclosure, it should be understood that the orientation or positional relationship indicated by the terms "center", "longitudinal", "transverse", "length", "width", "thickness", "up", "down", "front", "rear", "left", "right", "vertical", "horizontal", "top", "bottom", "inside", "outside", "clockwise", "counterclockwise", "axial", "radial" and "circumferential" and the like, is based on the orientation or positional relationship shown in the attached drawings, which is only for the convenience of describing the present disclosure and simplifying the description, and does not indicate or imply that the referred device or element must have a specific orientation, and be constructed and operated in a specific orientation, so it cannot be understood as a limitation of the present disclosure.

In addition, the terms "first" and "second" are only used for purpose of description, and cannot be understood as indicating or implying relative importance or implicitly indicating the number of indicated technical features. Therefore, the feature defined as "first" or "second" may explicitly or implicitly include at least one such feature. In the description of the present disclosure, "a plurality of' means at least two, such as two, three, etc., unless otherwise specifically defined.

In the present disclosure, unless otherwise expressly defined, terms such as "install", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specified. For those skilled in the art, the specific meanings of the above terms in the present disclosure can be understood in specific situations.

In the present disclosure, unless otherwise expressly defined and specified, a structure in which a first feature is "on" or "below" a second feature may include an embodiment in which the first feature is in direct contact with the second feature, or may further include an embodiment in which the first feature and the second feature are in indirect contact through intermediate media. Furthermore, a first feature "on", "above", or "on top of' a second feature may include an embodiment in which the first feature is right or obliquely "on", "above", or "on top of' the second feature, or just means that the first feature is at a height higher than that of the second feature, while a first feature "below", "under", or "on bottom of' a second feature may include an embodiment in which the first feature is right or obliquely "below", "under", or "on bottom of' the second feature, or just means that the first feature is at a height lower than that of the second feature.

In the description of the present disclosure, terms such as "an embodiment", "some embodiments", "an example", "a specific example" or "some examples" means that a particular feature, structure, material, or characteristic described in connection with the embodiment or example is included in at least one embodiment or example of the present disclosure. Thus, the appearances of these terms in various places throughout this specification are not necessarily referring to the same embodiment or example of the present disclosure. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

Although the embodiments of the present disclosure have been shown and described above, it can be understood that the above embodiments are illustrative and shall not be understood as limitation to the present disclosure, and changes, modifications, alternatives and variations can be made in the above embodiments within the scope of the present disclosure by those skilled in the art.

## Claims

1. A drawer-type carbon capture solvent purification and recovery device, comprising a support, a mounting frame and a purification module, wherein the mounting frame is in a wheel shape, the support supports the mounting frame through a rotating shaft, one end of the rotating shaft is keyed or fixedly connected with the center of the mounting frame, and the other end of the rotating shaft is connected with a driving device;
a plurality of mounting slots are provided at equal intervals along an outer periphery of the mounting frame, and two adjacent mounting slots are communicated with each other, and one purification module is insertably connected into each mounting slot;
the purification module comprises a filter portion and a insertable portion which are fixedly connected; the insertable portion is insertably connected into the mounting slot; the filter portion is provided with a cavity for containing a packing; the filter portion is provided with a liquid inlet pipe and a liquid outlet pipe which are communicated with the cavity; and a control valve is provided at both the liquid inlet pipe and the liquid outlet pipe; two sides of the filter portion are symmetrically provided with a first connecting hole and a second connecting hole, and both the first connecting hole and the second connecting hole are communicated with the cavity, and two adjacent filter portions are connected in a sealed way through a telescopic pipe, and the telescopic pipe is provided in the first connecting hole of one of the two adjacent filter portions, and is inserted into the second connecting hole of the other filter portion after the telescopic pipe is extended outwards; and an external regulating mechanism is connected with the telescopic pipe and controls the telescopic pipe to extend or contract and insert, and both the first connecting hole and the second connecting hole are provided with an electromagnetic valve at one side inside the cavity;
the mounting frame is divided into a purification region on the left half and a regeneration region on the right half, and the number of purification modules in the purification region and the number of purification modules in the regeneration region are the same;
the insertable portion comprises a frame, an elastic sheet, a pressing portion and a boss, wherein the elastic sheet is in a fan-shaped structure; the pressing portion and the boss are both fixed on a same side of the elastic sheet; a narrower end of the elastic sheet is connected with an outward side of the frame; the pressing portion is fixed on the other end of the elastic sheet; the outward side of the mounting frame is provided with a plurality of first insertion holes matched with the boss; and the insertable portion is inserted into the first insertion holes so as to be fixed through the boss, and the pressing portion is positioned outside the mounting frame, and when the pressing portion is pressed, the boss is separated from the first insertion hole, so that the purification module is pulled out from the mounting frame; and
the regulating mechanism comprises a rotating rod and a first guide block, wherein the first guide block is fixed on the rotating rod; the filter portion is provided with a second insertion hole for the rotating rod to extend into and a guide hole for the first guide block to extend into; the guide hole is in an arc-shape; one end of the rotating rod extends out of the purification module; the other end of the rotating rod is fixedly connected with a side wall of the telescopic pipe; and a spiral slot is provided at an inner side of the first connecting hole, and a second guide block is fixed on the side wall of the telescopic pipe, and the second guide block is snapped into the spiral slot, and when the rotating rod is pulled clockwise or counterclockwise, the second guide block of the telescopic pipe rotates along the spiral slot, so that the telescopic pipe extends out toward the second connecting hole or contracts into the first connecting hole.

2. The drawer-type carbon capture solvent purification and recovery device according to claim 1, wherein an openable and closable sealing insertable plate is provided at the outer side of the cavity of the filter portion.

3. The drawer-type carbon capture solvent purification and recovery device according to claim 1 or 2, wherein a handle for pulling the purification module is provided at the outer side of the filter portion.

4. The drawer-type carbon capture solvent purification and recovery device according to any one of claims 1-3, wherein each purification module is provided with a conductivity meter and a differential pressure gauge.

5. A drawer-type carbon capture solvent purification and recovery method, using the drawer-type carbon capture solvent purification and recovery device according to any one of claims 1-4, comprises the following steps:
S1, pulling out all purification modules from the mounting frame, inserting the purification modules into the mounting slot of the mounting frame after filling the packing required for filtration in each purification module, and pulling each rotating rod to make all two adjacent purification modules communicate through the telescopic pipe;
S2, controlling the electromagnetic valves of the two uppermost adjacent purification modules and the electromagnetic valves of the two lowermost adjacent purification modules to be in a closed state, so that the left half of the mounting frame forms the purification region, the right half forms the regeneration region, and the electromagnetic valves between the rest of other two adjacent purification modules are in an open state;
S3, opening a control valve of the liquid inlet pipe of the uppermost purification module in the purification region and a control valve of a liquid outlet pipe of the lowermost purification module in the purification region, introducing liquid to be filtered into the purification module from the liquid inlet pipe, and discharging the liquid from the liquid outlet pipe of the lowermost purification module after sequentially flowing through all the purification modules in the purification region from top to bottom;
S4, after filtering for a period of time, with the retention in the packing in the purification module gradually increasing, the packing in the uppermost purification module failing first, and closing the control valve of the uppermost liquid inlet pipe in the purification region and the control valve of the lowermost liquid outlet pipe in the purification region, starting the driving device, rotating the mounting frame clockwise, and rotating the uppermost purification module in the purification region to the regeneration region, rotating the lowermost purification module in the regeneration region to the purification region, turning on the electromagnetic valve in the closed state in step S2, turning off the electromagnetic valve of the uppermost two adjacent purification modules and the electromagnetic valve of the lowermost two adjacent purification modules at this time, turning on the control valve of the uppermost liquid inlet pipe and the control valve of the lowermost liquid outlet pipe in the purification region at this time, and continuously introducing the liquid to be filtered into the purification modules from the liquid inlet pipe;
S5, water-washing, regenerating or replacing the packing of the purification module transferred from the purification region to the regeneration region, and the water-washed, regenerated or replaced packing is to be reused;
S6, repeating steps S4-S5 until the liquid to be filtered is completely filtered.

6. The drawer-type carbon capture solvent purification and recovery method according to claim 5, wherein in step S5, the methods of water-washing and regeneration are as follows: closing the electromagnetic valves at both sides of the purification module to be regenerated by water-washing, opening the control valves of the liquid inlet pipe and the liquid outlet pipe of the purification module, introducing the liquid needed for regeneration into the purification module from the liquid outlet pipe, soaking the packing for a period of time, and then discharging the liquid, and then introducing water into the purification module from the liquid outlet pipe to clean the packing, and discharging the water flow carrying the retention from the liquid inlet pipe..

7. The drawer-type carbon capture solvent purification and recovery method according to claim 5 or 6, wherein in step S4, based on that all purification modules in the purification region form a modular group with multiple kinds of packings arranged in sequence, and the modular group is integrally rotated to the regeneration region.
